# EUROPÄISCHE PATENTSCHRIFT

(11) **EP 1 513 361 B1**
(45) Veröffentlichungstag und Bekanntmachung des Hinweises auf die Patenterteilung: **28.11.2007**
(21) Anmeldenummer: 03020088.5
(22) Anmeldetag: 04.09.2003
(51) Int. Cl.: H04Q 7/38

(54) **Verfahren und System für ein Handover eines Mobilgeräts zwischen einem ersten und einem zweiten Funknetz**
Method and system for handing over a mobile device between a first radio network and a second radio network
Procédé et système de transfert d'un appareil mobile entre un premier et un deuxième réseau radio

(43) Veröffentlichungstag der Anmeldung: 09.03.2005
(73) Patentinhaber: Swisscom Mobile AG, 3050 Bern (CH)
(72) Erfinder: Lauper, Eric, 3014 Bern (CH); Hauenstein, Felix, 3672 Oberdiessbach (CH)
(74) Vertreter: P&TS Patents & Technology Surveys SA

(56) Entgegenhaltungen:
- EP-A- 1 024 676
- EP-A- 1 209 941
- WO-A-01/47290
- WO-A-97/30561
- GB-A- 2 322 051

## Beschreibung

### Technisches Gebiet

Die vorliegende Erfindung betrifft ein Handover-Verfahren und ein System, bei welchem die Sprach- oder Datenverbindung und die Kontrolle dieser Verbindung zwischen einem ersten Funknetz, zum Beispiel einem digitalen öffentlichen zellularen Mobilfunknetz und einem zweiten Funknetz, zum Beispiel einem ein WLAN übertragen wird.

### Stand der Technik

Digitale öffentliche Mobilfunknetze, oder "WWAN" (Wireless Wide Area Networks) sind heute weit verbreitet und versorgen einen grossen Teil der Welt (industrialisierte und bewohnte Gebiete). Mobilteilnehmer werden in einem Mobilfunknetz registriert und können dank Roaming-Abkommen Sprach- und Datenverbindungen aufbauen, auch wenn sie sich in fremden besuchten Netzwerken befinden. GSM, GPRS, HSCSD, EDGE, UMTS und CDMA sind Beispiele von heutzutage verbreiteten digitalen öffentlichen Mobilfunknetzsystemen. Mobilgeräte, die sich in solchen Netzen anmelden können, umfassen unter anderem Mobilfunktelefone, aber auch sogenannte Smart Phones, PDA (Personal Digital Assistants) und mit einer Funkkarte ausgestattete Laptops und Desktop-Rechner.

Andererseits werden drahtlose Local Area Netzwerke, sogenannte WLANs (Wireless Local Area Network) oder Bluetooth-Netzwerke, immer beliebter und erlauben Mobilteilnehmern, sich drahtlos mit Rechnern in der Umgebung und über einen Router im lokalen Netzwerk mit dem Internet zu verbinden. WLANs werden verwendet, um Daten- aber auch Sprachverbindungen (meistens über das Internet Protokoll) mit anderen Rechnern aufzubauen. Der Mobilteilnehmer muss über einen WLAN-fähigen Rechner, Laptop, oder PDA verfügen, um sich in einem WLAN anzumelden. Neulich sind auch WLAN-fähige Mobilfunktelefone erschienen, die vor allem dazu bestimmt sind, Sprachverbindungen über ein VolP (Voice over IP) Verfahren durchzuführen. WLAN-Netzwerke werden vor allem in sogenannten "Hotspots" verwendet (zum Beispiel Restaurants, Internet-Cafés, Hotels, Flughafen, Bahnhöfe und andere öffentliche Standorte, die mit einem sogenannten Access Point ausgerüstet sind).

Ausserdem sind auch multimodale Mobilfunkkarten bekannt, die einem Rechner über GSM, GPRS, HSCSD oder WLAN den Zugang zu Netzen ermöglichen. Das Produkt Nokia Cardphone D211 ist ein bekanntes Beispiel einer solchen Karte im PC-Card-Format. Wenn sie in ein Notebook oder einen PDA eingeschoben wird, kann sich der Benutzer wahlweise in einem zellularen oder in einem WLAN Netzwerk anmelden, um Daten über das Internet zu senden und zu empfangen. Die Auswahl des angemeldeten Netzes wird jedoch manuell vom Mobilteilnehmer vor der Verbindung getroffen; bewegt sich ein Mobilteilnehmer bis er das vom gewählten Netz versorgte Gebiet verlässt, wird die Verbindung unterbrochen. Ein Handover ist nicht möglich. Ausserdem erlaubt diese Karte keine Sprachübertragung über das Mobilfunknetz.

Mobilfunktelefone, die sich wahlweise in einem zellularen Netz und/oder in einem WLAN anmelden können, wurden auch vorgeschlagen.

WO-A2-02/062094 beschreibt ein System, das ein "seamless handover" erlaubt, wenn ein Mobilteilnehmer zwischen einem GSM Netz und einem WLAN roamt. Handover bedeutet in diesem Dokument der Prozess, bei welchem eine Sprach- oder Datenübertragung, ein Anrufaufbauprozess, oder eine Meldungsübertragung, weitergeführt wird, sogar wenn sich der Mobilteilnehmer sich innerhalb eines Gesprächs vom Versorgungsgebiet eines Netzes zu dem Versorgungsgebiet des anderen Netzes bewegt. Seamless bedeutet in diesem Kontext, dass das Handover nahtlos, unbemerkt und ohne Intervention des Mobilteilnehmers erfolgt; das Mobilgerät, oder die Netzinfrastruktur, wählt immer automatisch das schnellst verfügbare Netz, oder das Netz, welches das Gebiet in dem sich der Mobilteilnehmer befindet am besten versorgt.

Eine ähnliche Lösung wird auch in US-A1-2002/0085516 beschrieben. In diesem Fall kann der Mobilteilnehmer im Voraus Präferenzen angeben, um zu steuern, unter welchen Bedingungen das Handover stattfinden soll. Sind diese Bedingungen erfüllt, wird das Handover dann automatisch durchgeführt, ohne dass der Mobilteilnehmer darüber informiert wird.

WO-A1-00/38465 beschreibt andere Handover Lösungen zwischen verschiedenen Netzen. Das Handover wird zwischen dem Mobilgerät und den beiden Netzsystemen verhandelt; obwohl im Voraus bestimmte Mobilteilnehmerpräferenzen berücksichtigt werden, hat der Mobilteilnehmer keine Möglichkeit, einen Handover-Prozess, der gerade stattfindet, zu verhindern.

Andere ähnliche Handover-Verfahren wurden auch in US-B1-6,243,581 beschrieben. WO-A2-01/58177 beschreibt eine weitere Lösung, bei welcher Handover vom Mobilteilnehmer mit einer Anfrage ("Ich will mehr Bandbreite") initiiert werden; diese Anfrage wird von einem Software Agent geprüft und das Handover wird sobald wie möglich automatisch veranlasst. Der Mobilteilnehmer hat jedoch keine Möglichkeit zu wissen, ob seine Anfrage überhaupt sinnvoll ist.

EP-A1-1 207 708 beschreibt ein Handover-Verfahren zwischen einem GSM und einem Bluetooth-Netzwerk. Das Handover findet automatisch statt, wenn sich der Mobilteilnehmer in einer neuen Zelle bewegt; der Mobilteilnehmer wird lediglich mit einem Audio- oder anderen Alarm darüber informiert. Er hat jedoch keine Möglichkeit, das Handover selbst zu veranlassen oder zu verhindern.

Bei allen erwähnten Lösungen wird das Handover entweder vom Mobilteilnehmer initiiert und gesteuert, oder ganz automatisch vom Mobilgerät oder vom Netz. Mobilteilnehmer-initiierte Lösungen haben den Nachteil, dass die Mobilteilnehmer nur selten wissen, dass ein Handover überhaupt möglich ist; sie werden somit gezwungen, viele Anfragen zu schicken, damit überhaupt ab und zu ein Handover erfolgt.

Automatische nahtlose Handover Lösungen sind benutzerfreundlicher und effizienter, weil immer automatisch das beste Netz gewählt wird. Sie haben jedoch den Nachteil, dass der Mobilteilnehmer nicht selbst entscheiden kann, über welches Netz er kommuniziert. Dies ist vor allem problematisch, wenn die Gebühren für die Benutzung der beiden Netze unterschiedlich sind; ein Mobilteilnehmer könnte in diesem Fall gezwungen werden, über das teuerste Netz zu kommunizieren, auch wenn das für ihn nicht nötig oder unerwünscht wäre. Ausserdem erfolgt der Handover-Prozess nicht immer ohne Unterbrechung der Verbindung, was vor allem bei Datenübertragungen problematisch sein kann.

GB-A-2 322 051 betrifft ein Handover-Verfahren, wobei in einer Ausführungsform der Benutzer durch ein Prompt aufgefordert wird, um sich für das Handover zu entscheiden. Die Bestimmung, ob ein Handover notwendig ist, geschieht ausschliesslich aufgrund von ermittelten Zellinformationen des Mobilfunknetzes.

EP-A1-1 024 676 beschreibt Handover-Verfahren, in welchem der Mobilteilnehmer vor dem Handover informiert wird, beispielsweise mit einem visuellen, hörbaren oder fühlbaren Indikator, um den Mobilteilnehmer über ein potentielles Handover zu informieren. Dem Mobilteilnehmer wird jedoch nur die Möglichkeit gegeben, seine Bewegungsrichtung zu ändern, um das Handover zu verhindern; es wird nicht beschrieben, dass der Mobilteilnehmer mit seinem Gerät die Entscheidung treffen kann.

### Zusammenfassung der Erfindung

Es ist daher ein Ziel der vorliegenden Erfindung, ein Handover-Verfahren vorzuschlagen, bei welchem die oben genannten Nachteile vermieden werden.

Ein anderes Ziel der Erfindung ist es, ein Verfahren anzubieten, bei welchem immer und ohne Verzögerung das beste verfügbare Netz angeboten wird.

Ein anderes Ziel der Erfindung ist es, ein Verfahren anzubieten, bei welchem der Mobilteilnehmer selbst entscheiden kann, über welches Netz die Kommunikation abläuft.

Diese Ziele werden anhand eines Verfahrens mit den Merkmalen des Hauptanspruchs erreicht; bevorzugte Ausführungsformen werden ausserdem in den Nebenansprüchen angegeben.

Diese Ziele werden insbesondere durch ein Verfahren und durch ein System mit den Merkmalen der unabhängigen Ansprüche erreicht.

Insbesondere werden diese Ziele bei einem Verfahren entsprechend dem Oberbegriff des Anspruchs 1 und durch ein System entsprechend dem Oberbegriff des Anspruchs 30 dadurch erreicht, dass die benannte Meldung eine Datenmeldung ist, die während einer Sprach- oder Datenübertragung dem Mobilteilnehmer angezeigt wird, ohne die benannte Sprach- oder Datenübertragung zu unterbrechen wobei der Mobilteilnehmer seine persönlichen Präferenzen im Voraus angibt, um zu bestimmten, wann ein Handover als zweckmässig betrachtet werden soll.

Dies hat den Vorteil, dass die Möglichkeit oder Zweckmässigkeit eines Handovers automatisch ermittelt wird, so dass das beste verfügbare Netz automatisch ohne Verzögerung ermittelt wird.

Dies hat auch den Vorteil, dass das Handover automatisch initiiert und durchgeführt wird, ohne dass sich der Mobilteilnehmer darum kümmern muss.

Dies hat noch den weiteren Vorteil, dass der Mobilteilnehmer immer selbst bestimmt, ob ein Handover veranlasst werden soll und über welches Netz er kommunizieren will.

Dies hat noch den weiteren Vorteil, dass dem Mobilteilnehmer ein ansonsten absolut nahtloser (seamless) Handover-Vorgang angekündigt wird. Der Mobilteilnehmer weiss somit immer, mit welchem Netz er verbunden ist und kann sogar entscheiden, ob das Handover stattfinden soll oder nicht.

### Kurze Beschreibung der Figuren

Die vorliegende Erfindung wird mit Hilfe der Beschreibung besser verständlich, welche als Beispiel angeführt ist und durch die Figuren dargestellt wird, wobei:

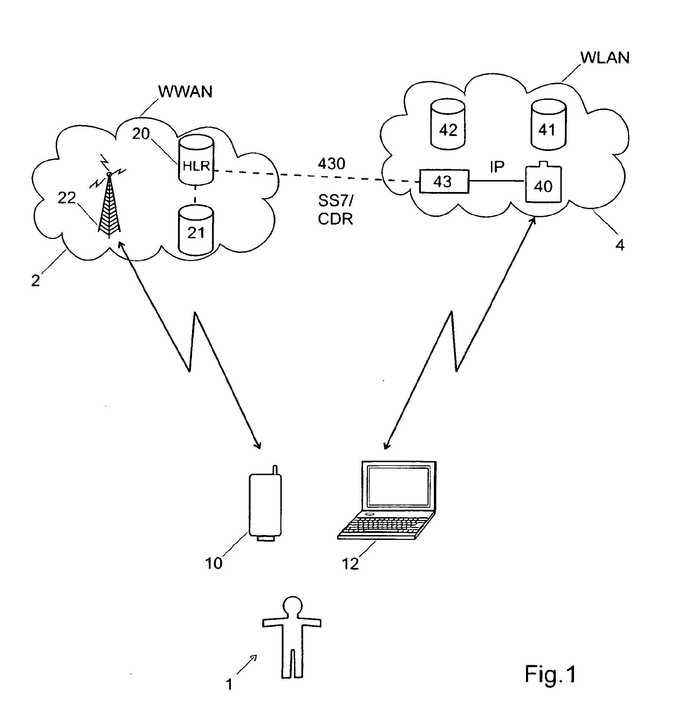

Die Figur 1 ein Blockschema eines Netzwerkssystems zeigt mit einem zellularen digitalen Netzwerk, einem drahtlosen lokalen Netzwerk, und einem Mobilteilnehmer der sich in beiden Netzwerken einloggen kann.
Die Figur 2 ein Gebiet zeigt, das von mehreren Zellen eines zellularen Mobilfunknetzes versorgt wird, und in welchem ein Hot Spot eines drahtlosen lokalen Netzes vorhanden ist.
Die Figur 3 zeigt ein Flussdiagramm eines Handover-Prozesses gemäss der Erfindung.
Die Figur 4 zeigt ein erstes Beispiel einer Meldung, um einen Mobilteilnehmer anzufragen, ob ein Handover stattfinden soll.
Die Figur 5 ein zweites Beispiel einer Meldung, um einen Mobilteilnehmer anzufragen, ob ein Handover stattfinden soll.

### Wege zur Ausführung der Erfindung

Die vorliegende Erfindung kann verwendet werden, um Handovers zwischen einem ersten Netz, in diesem Beispiel ein öffentliches digitales zellulares Netz 2 und einem zweiten digitalen Funknetz 4 zu ermöglichen. Das erste Netz ist beispielsweise ein zellulares Netz der zweiten oder dritten Generation, beispielsweise ein GSM900, GSM1800, PCS1900, HSCSD (High Speed Circuit Switched Data), GPRS (General Packet Radio System), EDGE (Enhanced Data Rates for Global Evolution), CDMA, WCDMA oder UMTS Netz. Das zellulare Netz 2 umfasst ein Heimdatei-Register (HLR, Home Location Register) 20, in welchem der momentane Standort aller registrierten (mit einem Identifizierungsmodul identifizierten) Heim-Mobilteilnehmer abgelegt sind. Das Heimdatei-Register 20 gibt auch an, ob sich das Mobilgerät 10, 12 im Heim-Mobilfunknetz befindet oder etwa in einem besuchten WLAN 4, oder gleichzeitig in mehreren Netzen, um beispielsweise eine Sprachverbindung durch das Mobilfunknetz 2 und eine simultane Datenverbindung durch das WLAN 4 durchzuführen.

Die Benutzung des Netzes 2 wird von einem Verrechnungszentrum 21 (Billing System) durchgeführt; Daten- und Sprachverbindungen können vorzugsweise entweder im Voraus (pre-paid) oder im Nachhinein (post-paid) verrechnet werden. Das Mobilfunknetz umfasst eine Vielzahl von Basisstationen 22, die je eine Zelle des Netzes versorgen, um somit ein ganzes Gebiet mit einer Mehrzahl von Zellen abzudecken.

Das zweite Netz 4 ist in diesem Beispiel vorzugsweise ein drahtloses Netz, das eine schnellere oder qualitativ bessere Datenübertragung erlaubt. Das zweite Netz ist beispielsweise ein WLAN-Netz (Wireless Local Area Network), beispielsweise ein 802.11b oder 802.11c-fähiges lokales Netz, das eine schnelle Datenübertragung in kleineren Gebieten (sogenannten Hotspots) 4 in der Nähe von Accesspunkten 40 erlaubt. Hotspots können beispielsweise in Restaurants, Internet-Cafés, Hotels, Flughafen, Bahnhöfen, öffentlichen Transportmitteln und anderen öffentlichen Standorten installiert werden. Andere Beispiele von zweiten Netzen umfassen unter anderem Bluetooth, HomeRF und UMTS-Netze. Das zweite Netz könnte aber auch ein anderes zellulares Mobilfunknetz, zum Beispiel das Mobilfunknetz eines anderen Betreibers.

Das zweite Netz 4 umfasst eine Registerdatei 41, in welcher eine Identifikation der registrierten und/oder der momentan angeschlossenen Teilnehmer gespeichert ist. Angeschlossene Teilnehmer im Netz 4 werden vorzugsweise mit dem Identifizierungsmodul (SIM-Karte) im Mobilgerät 10, 12 identifiziert; solange keine Verbindung vom Betreiber des Mobilfunknetzes 2 verrechnet wird, können Teilnehmer 1 auch mit einem Passwort, oder mit biometrischen Parametern identifiziert werden; es können auch anonyme Teilnehmer angeschlossen werden. Die Registerdatei 41 prüft die Zugriffe auf das Netz 4 und tauscht Authentifizierungsdaten mit den Teilnehmern 1 und dem Mobilfunknetz 2.

Verbindungen im zweiten Netz 4 können von einem Verrechnungszentrum 42 verrechnet werden, beispielsweise mit Prepaid-Karten.

Ein Signalisationslink 430 ist vorzugsweise zwischen dem Mobilfunknetz 2 und dem drahtlosen Netz 4 vorgesehen, über welchen Daten für das Handover und das Roaming zwischen den beiden Netzen ausgetauscht werden können. Der Link ist vorzugsweise ein SS7-Link: ein Gateway 43 im WLAN 4 übersetzt die TCP-IP Signalisierungdaten vom Accesspunkt 40 in SS7 Daten. Die Daten, die über den Link 430 übertragen werden, umfassen unter anderem MAP Meldungen und Zahlungsdaten (CDR, Call Detail Records), die für die Verrechnung der Verbindungen verwendet werden können.

Die Benutzung des zweiten Netzes wird oft anders verrechnet als die Benutzung des Ersten. Zum Beispiel können Verbindungsminuten im zweiten schnellen Netz teurer verrechnet werden als im ersten Netz. Es ist auch oft der Fall, dass die verrechneten Gebühren im ersten Netz vor allem von der Dauer der Verbindung abhängig ist, während in WLAN-Netzen oft die Menge der übertragenen Daten verrechnet wird. Möglich ist auch, dass die Benutzung des zweiten Netzes pauschal verrechnet wird, zum Beispiel mit einem Stunden-, Tages- oder Monatsabonnement oder Karte. Beide Netze können auch von unterschiedlichen Betreibern mit verschiedenen Tarifen verwaltet werden. Es ist somit für den Mobilteilnehmer 1 wichtig, dass er immer weiss und selbst entscheidet, über welches Netz er telefoniert oder Daten austauscht. Im Rahmen der Erfindung kann der Mobilteilnehmer entweder eine einzelne konsolidierte Rechnung vom Betreiber eines der Netze, das über Roaming-Abkommen mit dem anderen Netz verfügt, oder eine separate Rechnung von jedem Netz erhalten.

Der Mobilteilnehmer 1 verfügt über ein Mobilgerät, zum Beispiel ein GSM- und WLAN-fähiges Mobilfunktelefon 10, ein Notebook 12 mit einer GSM- und WLAN-Kommunikationskarte, ein Smartphone, ein PDA mit Datenschnittstelle usw. Das Mobilgerät 10, 12 kann sich sowohl im zellülaren Netz 2 als auch im drahtlosen lokalen Netz 4 anmelden, um an Daten-oder Sprachverbindungen teilzunehmen.

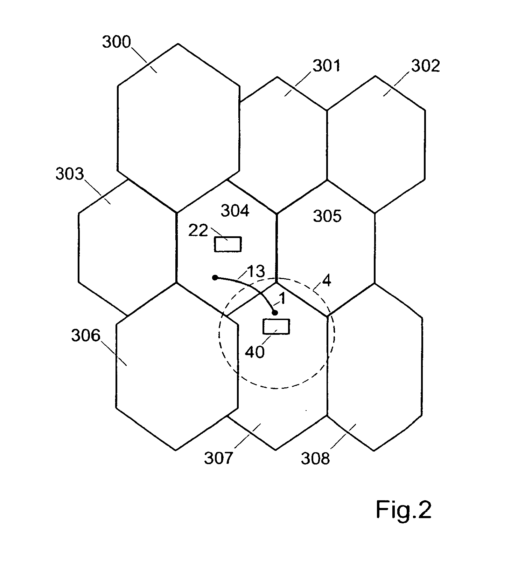

Die Figur 2 zeigt ein geographisches Gebiet, über welches sich mehrere unterschiedlich grosse Zellen 300 bis 308 des zellularen Mobilfunknetzes 2 erstrecken. Jede Zelle wird von einer Basisstation 22 versorgt. Ein WLAN-Netz 4 erstreckt sich über einen kleineren Teil des geographischen Gebiets. Das Bezugszeichen 13 zeigt die Bewegung eines Mobilteilnehmers 1 aus der Zelle 304, der in das WLAN-Netz 4 eintritt.

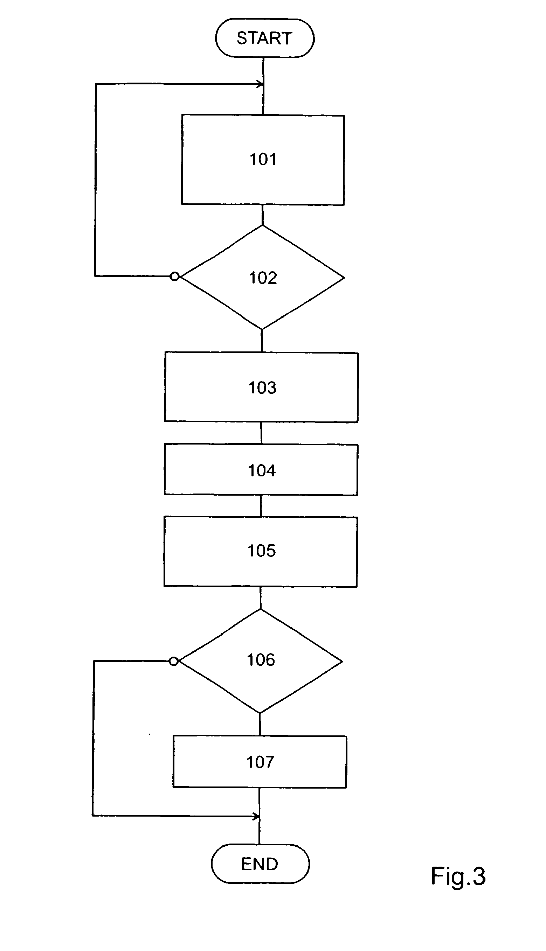

Der Handover-Prozess, der erfindungsgemäss beim Eintritt in das Netz 4 erfolgt, wird anhand des Flussdiagramms der Figur 3 näher erläutert. Der Beginn des Prozesses wird mit dem Bezugszeichen 100 erläutert. Im Verfahrenschritt 101 wird die Signalqualität in beiden Netzen 2, 4 quasi kontinuierlich oder periodisch ermittelt. Diese Ermittlung kann im Mobilgerät 10, 12 oder in der Basisstation 22 und im Accesspunkt 40 stattfinden. In einem bevorzugten Beispiel werden verschiedene Parameter der Signalqualität mindestens einmal pro Sekunde im Mobilgerät 10, 12 und optional in der Basisstation 22 ermittelt und dem bedienenden Netz als Messprotokoll mitgeteilt. In einer anderen Ausführungsvariante wird eine Bewertung der Signalqualitätsparameter erst oder zusätzlich auf Anfrage durchgeführt, wenn der Mobilteilnehmer aktiv nach der Möglichkeit eines Handovers fragt.

Es wird dann von einem System (zum Beispiel in einem Server in der Netzinfrastruktur) entschieden, ob ein Handover zweckmässig ist und dem Teilnehmer vorgeschlagen werden soll.

Im Schritt 102 wird dann ermittelt, ob ein Handover zweckmässig ist. Ein Handover wird als zweckmässig betrachtet, wenn ein Kriterium oder eine Kombination folgender Kriterien erfüllt sind:
> Die Qualität der Übertragung zwischen dem Mobilgerät 10,12 und der bedienenden Basisstation 22 im Mobilfunknetz 2 ist schlechter geworden, so dass ein Handover an das WLAN-Netz 4 zweckmässig oder gar nötig wird. Dies erfolgt beispielsweise, wenn der Mobilteilnehmer 1 in ein Gebäude oder in eine U-Bahn eintritt, die über einen WLAN-Accesspunkt verfügen, aber nur schlecht vom Mobilfunknetz versorgt werden.
> Die Qualität der Übertragung zwischen dem Mobilgerät 10,12 und dem nächsten Access Point in einem benachbarten WLAN ist besser geworden, so dass ein Handover an das WLAN-Netz 4 zweckmässig wird. Dies erfolgt beispielsweise, wenn der Mobilteilnehmer 1 in einen WLAN-Hotspot eintritt.
> Die Qualität der Übertragung zwischen dem Mobilgerät 10,12 und dem bedienenden Access Point im WLAN im Mobilfunknetz 2 ist schlechter geworden, so dass ein Handover an das Mobilfunknetz 2 zweckmässig oder gar nötig wird. Dies erfolgt beispielsweise, wenn der Mobilteilnehmer 1 einen WLAN-Hotspot verlässt.
> Die Qualität der Übertragung zwischen dem Mobilgerät 10,12 und der nächsten Basisstation 22 im Mobilfunknetz 2 ist besser geworden, so dass ein Handover an das Mobilfunknetz 2 zweckmässig oder gar nötig wird. Dies erfolgt beispielsweise wenn der Mobilteilnehmer 1 in ein vom Mobilfunknetz versorgtes Gebiet eintritt
> Die für die momentane oder geplante Sprach- oder Datenübertragung benötigte Bandbreite ist höher als eine erste Schwelle, so dass ein Handover an ein schnelleres Netz angebracht ist.
> Gewisse Applikationen, die eine Kombination über eines der benannten Netze 2, 4 verlangt, wird durchgeführt.
> Der Mobilteilnehmer hat im Voraus gewisse Mobilteilnehmerpräferenzen für die Auswahl von einem der Netze festgelegt und im Mobilgerät oder in einem der Netze abgelegt.
> Der Mobilteilnehmer 1 hat ausdrückliche Befehle eingegeben.
> Die Kommunikationstarife in einem der Netze haben sich in Abhängigkeit von der Zeit oder des Standortes geändert.
> Die Kommunikationstarife sind im neuen angebotenen Netz teurer; in diesem Fall werden Handover in billigeren Netzen nicht angekündigt.
> Die Geschichte von früheren Mobilteilnehmerbefehlen. Es wird zum Beispiel vermieden, dass ein Handover mehrmals in einer kurzen Zeit vorgeschlagen wird, oder dass eine oft mehrmals abgelehnte Handover-Möglichkeit wieder angeboten wird.
> usw.

Parameter, die quasi kontinuierlich vom Mobilgerät 10, 12 und/oder von der Basisstation oder Accesspunkt ermittelt werden, um die Signalqualität zu bestimmen, umfassen beispielsweise:
> Maximale Sendeleistung des Mobilgeräts 10, 12 für beide Netzsysteme
> Maximale Sendeleistung der bedienenden Basisstation beziehungsweise Accesspunkt
> Maximale Sendeleistung der benachbarten Basisstation beziehungsweise Accesspunkt
> Downlink-Signalqualität (zum Beispiel Brutto-Bitfehlerhäufigkeit) der Übertragung mit der bedienenden Basisstation / dem Accesspunkt
> Downlink-Signalqualität (zum Beispiel Brutto-Bitfehlerhäufigkeit) und Empfangspegel der Übertragung mit der benachbarten Basisstation / dem Accesspunkt
> Uplink-Signalqualität (zum Beispiel Brutto-Bitfehlerhäufigkeit) und Empfangspegel der Übertragung mit der benachbarten Basisstation / dem Accesspunkt
> usw.

Ist ein Handover nicht zweckmässig oder gar nicht möglich, wird einfach die Signalqualität weiter ermittelt. Ansonsten geht das Verfahren zum Schritt 103, in welcher eine Meldung für den Mobilteilnehmer vorbereitet wird. Diese Meldung kann im Mobilgerät 10, 12 oder vorzugsweise in der Infrastruktur des benannten Mobilfunknetzes und/oder des benannten WLANs erzeugt werden, beispielsweise in einer nicht dargestellten Handover-Plattform, beispielsweise in der Registerdatei 20.

Als Variante wird eine Meldung nur in bestimmten Fällen erzeugt, beispielsweise wenn das neue Netz teurer verrechnet wird als das erste. In anderen Fällen wird das Handover automatisch und ohne Einverständnis des Mobilteilnehmers durchgeführt. Der Mobilteilnehmer kann vorzugsweise selbst bestimmen, in welchen Handover-Fällen er zuvor eine Meldung erhalten will.

Im Schritt 104 wird die erzeugte Meldung an den Mobilteilnehmer 1 gesendet und im Schritt 105 wiedergegeben. Wird die Meldung im Mobilgerät vorbereitet, wird sie einfach vom Signalqualitätsermittlungsmodul an die Mobilgerätsanzeige gesendet und angezeigt. Wird hingegen die Meldung in der Infrastruktur der Netze 2, 4 vorbereitet, erfolgt ihre Sendung auch durch dieses Netz.

Die Meldung ist vorzugsweise eine Datenmeldung und wird dem Mobilteilnehmer während einer Sprach- oder Datenübertragung wiedergegeben. Das Mobilgerät 10, 12 ist vorzugsweise multimodal und kann die benannte Datenmeldung anzeigen, ohne eine hängige Sprach- oder Datenübertragung zu unterbrechen. Die Datenmeldung kann beispielsweise über SMS, MMS, EMS oder USSD übertragen werden.

In einer anderen Variante wird die Meldung über einen Instant Messaging Prozess in einem Pop-Up Fenster auf einer graphischen Oberfläche des Mobilgeräts 10, 12 wiedergegeben.

In noch einer anderen Variante umfasst die Meldung eine Audiomeldung oder ein Audiosignal (zum Beispiel eine automatisch generierte Sprachmeldung) die dem Mobilteilnehmer (und vorzugsweise nur ihm) während einer Sprach- oder Datenübertragen wiedergegeben wird.

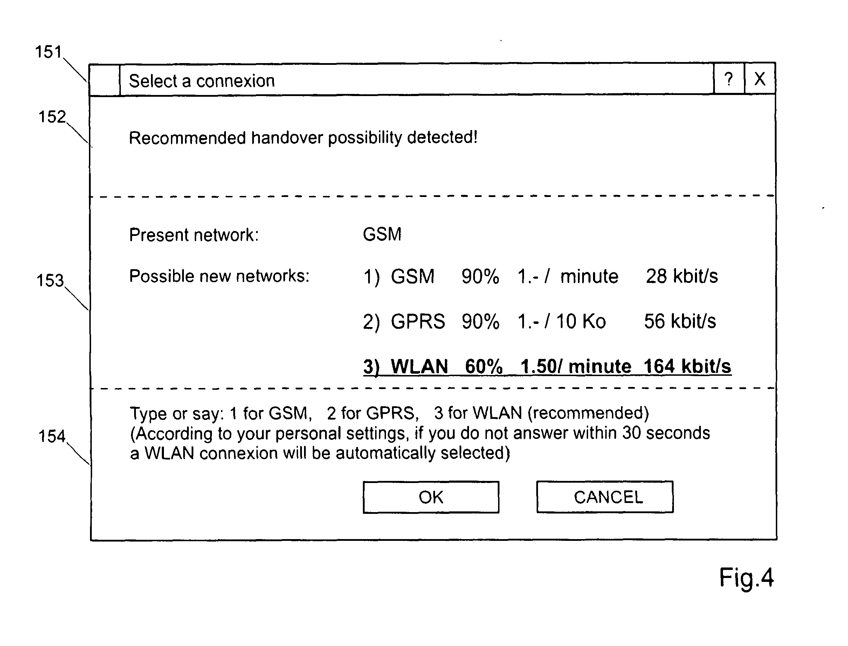

Die Figur 4 zeigt ein erstes Beispiel einer Meldung, um einen Mobilteilnehmer zu fragen, ob ein Handover stattfinden soll. In diesem Fall besteht die Meldung aus einem Fenster 150 auf einer graphischen Oberfläche des Mobilgeräts 10, 12; der Inhalt des Fensters kann mit einer E-Mail, mit einem Instant Messaging Prozess, mit einem MMS, usw. übertragen werden. Im dargestellten Beispiel umfasst die Meldung einen englischsprachigen Text; selbstverständlich ist es aber im Rahmen der Erfindung auch möglich, nationalisierte Anwendungen zu haben, um den Text in einer vom Mobilteilnehmer gewählten Sprache anzuzeigen.

Das Fenster 150 hat einen Titel 151 und eine Einleitung 152, die angibt, dass die Möglichkeit oder Zweckmässigkeit einer Verbindung über ein neues Netz ermittelt wurde. Im Hauptteil 153 des Fensters 150 werden die Parameter des bis jetzt bedienenden Netzes (im dargestellten Beispiel ein GSM-Netz) und der möglichen Netze angegeben. Im dargestellten Beispiel sind Verbindungen über ein GSM-Netz 2, über GPRS, oder über ein WLAN-Netz 4 möglich. Das zweckmässigste Netz wird fett oder farbig markiert, wobei diese Auswahl von Mobilteilnehmerpräferenzen abhängig ist. Für jedes Netz werden solche Parameter angegeben:
> Signalqualität (zum Beispiel als Prozentsatz)
> Tarif (zum Beispiel als Preis pro Dauereinheit oder pro übertragene Datenmenge)
> Maximale oder momentane Datenübertragungsgeschwindigkeit
> usw.

Der Mobilteilnehmer 1 kann im unteren Teil des Fensters 150 das von ihm gewünschte Netz angeben, über welches die Sprach- oder Datenverbindung übergeben werden soll. Die Auswahl kann mit einer Taste, mit einem DTMF-Code, mit einem Kursor, mit einem Sprachbefehl, oder mit irgendeinem Eingabemittel getätigt werden. In einem bevorzugten Beispiel wird nach einer gewissen Zeit automatisch das zweckmässigste Netz (oder das bis jetzt angewählte Netz) gewählt, falls der Mobilteilnehmer nicht eine andere Auswahl angibt.

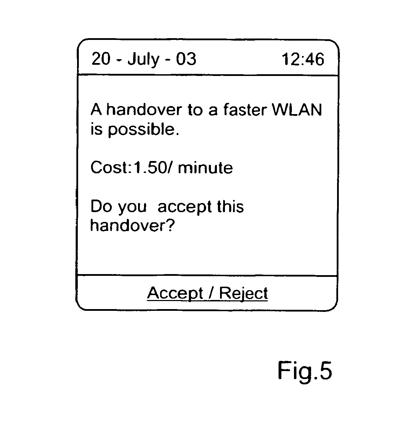

Die Figur 5 zeigt ein anderes Ausführungsbeispiel, in welcher die benannte Meldung über SMS an das Mobilgerät 10, 12 übertragen wird. Die SMS wird vorzugsweise während einer bestehenden Sprach- oder Datenübertragung im multimodal-Modus empfangen und wiedergegeben; der Mobilteilnehmer braucht nur die SMS mit einer Taste zu beantworten, damit der Handover-Befehl an das bedienende Netz und/oder an das anzuschliessende Netz gesendet wird.

Beim Schritt 106 der Figur 3 wird geprüft, ob der Mobilteilnehmer positiv oder implizit auf die Meldung reagiert hat.

Die Antwortmeldung kann als SMS, MMS, EMS oder USSD übertragen werden; möglich ist auch, dass die Antwort als E-Mail oder als IP-Packet über eine http, https oder wls-Session übertragen wird, oder als Sprachbefehl und/oder DTMF-Befehl eingegeben wird.

Als Variante wird gar keine Antwortmeldung gesendet. In diesem Fall wird die Entscheidung des Mobilteilnehmers 1 im Mobilgerät bewertet, welches das Handover bei einer positiven Antwort auch auslöst.

Wurde eine positive oder implizite Antwort erhalten, erfolgt das Handover im Schritt 107 und die allfällige bestehende Verbindung wird an das neu gewählte zweckmässigere Netz übergeben. Das Handover erfolgt, ohne dass der Mobilteilnehmer eine Verbindungsunterbrechung bemerkt; die bestehende Sprach- und/oder Datenübertragung wird im verlassenen Netz unterbrochen und unmittelbar danach im neu angemeldeten Netz neu eingerichtet. Es ist auch möglich, dass während einer Zeit eine Sprach-oder Datenverbindung gleichzeitig über beide Kanäle eröffnet wird. In diesem Fall wird das Mobilgerät 10, 12 mindestens temporär gleichzeitig im Mobilfunknetz 2 und im WLAN 4 angemeldet.

Selbstverständlich kann das Handover auch ausserhalb einer Sprach- und/oder Datenübertragung stattfinden. Findet gleichzeitig mehrere Kommunikationen, zum Beispiel eine Datenkommunikation und eine Sprachkommunikation, statt, kann das Handover nur eine oder alle Verbindungen betreffen.

Der Mobilteilnehmer 1 kann vorzugsweise bestimmen, dass er keine Meldung empfangen will, wenn eine Handover-Möglichkeit ermittelt wurde, sondern dass das Handover automatisch erfolgen soll. Er kann vorzugsweise auch seine persönlichen Präferenzen im Voraus angeben, um zu bestimmen, wann ein Handover als zweckmässig betrachtet werden soll. Ein Mobilteilnehmer könnte beispielsweise immer das schnellste verfügbare Netz anwählen, während ein anderer sich immer für das billigste entscheidet. Ein Mobilteilnehmer kann bestimmen, dass er WLAN nur für Datenverbindungen, nicht jedoch für Sprachverbindungen benutzen will. UMTS oder WLAN können gewählt werden, wenn eine Videokonferenz stattfindet oder beantragt wurde. Teure Netze werden angewählt, wenn noch genügend Geld auf einer Prepaid-Karte verfügbar ist, während billigere Netze automatisch angeschlossen werden sollen, sobald eine vorbestimmte Ausgabeschwelle überschritten wird. Somit können ganz persönliche Handover-Verhalten bestimmt werden.

Die Mobilteilnehmerpräferenzen können vorzugsweise über SMS, USSD, MMS oder über ein WAP oder WEB-Portal jederzeit vom Mobilteilnehmer 1 geändert werden. Es können auch verschiedene Profile definiert werden, um das Handover-Verhalten schneller zu ändern oder in Abhängigkeit von externen Triggern anzupassen. Ein Mobilteilnehmer kann vorzugsweise diesen Dienst abschalten, damit Handover unbemerkt und ohne Benachrichtigung erfolgen.

## Patentansprüche

1. Ein Verfahren, um Handover eines Mobilgeräts (10, 12) eines Mobilteilnehmers (1) zwischen einem ersten Mobilfunknetz (2) und einem zweiten Funknetz (4) zu steuern, mit folgenden Schritten
automatische Ermittlung durch messtechnische Bewertung der Empfangs- und/oder Kommunikationsparameter, dass ein Handover zwischen dem ersten Mobilfunknetz (2) und dem zweiten Funknetz (4) zweckmässig erscheint (102),
sobald ein zweckmässiges Handover ermittelt wurde, wird eine Meldung automatisch erzeugt (103) und wiedergegeben (105), um den Mobilteilnehmer (1) um sein Einverständnis anzufragen, bevor das Handover stattfindet (107), wobei
die benannte Meldung eine Datenmeldung ist, **dadurch gekennzeichnet, dass** die Meldung während einer Sprach- oder Datenübertragung dem Mobilteilnehmer (1) angezeigt wird, ohne die benannte Sprach- oder Datenübertragung zu unterbrechen, wobei der Mobilteilnehmer (1) seine persönlichen Präferenzen im Voraus angibt, um zu bestimmen, wann ein Handover als zweckmässig betrachtet werden soll.

2. Das Verfahren gemäss Anspruch 1,**dadurch gekennzeichnet, dass**
ein Kriterium oder eine Kombination folgender Kriterien
• die Qualität der Übertragung zwischen dem benannten Mobilgerät (10, 12), der nächsten Basisstation (22) im benannten Mobilfunknetz (2) und dem nächsten Access Point (40) im benannten zweiten Funknetz (4),
• die für die momentane oder geplante Sprach- oder Datenübertragung benötigte Bandbreite,
• im benannten Mobilgerät (10, 12) durchgeführte Applikationen,
• Mobilteilnehmerpräferenzen,
• Kommunikationstarife,
• die Geschichte von früheren Mobilteilnehmerbefehlen
als Kriterium bei der Ermittlung der Zweckmässigkeit eines Handovers verwendet werden.

3. Das Verfahren gemäss Anspruch 1 oder 2, in welchem das zweite Funknetz (4) ein WLAN-Netz, ein Bluetooth-Netz, ein UMTS-Netz (4) oder ein Mobilfunknetz ist.

4. Das Verfahren eines der Ansprüche 1 bis 3, in welchem beide Funknetze (2, 4) unterschiedliche Datenübertragungsgeschwindigkeiten aufweisen.

5. Das Verfahren gemäss einem der Ansprüche 1 bis 4, in welchem die Erzeugung und/oder die Wiedergabe der benannten Meldung vom Mobilteilnehmer (1) abgeschaltet werden.

6. Das Verfahren gemäss einem der Ansprüche 1 bis 5, in welchem die benannte messtechnische Bewertung der Empfangs- und/oder Kommunikationsparameter (101) im benannten Mobilgerät (10, 12) erfolgt.

7. Das Verfahren gemäss einem der Ansprüche 1 bis 6, in welchem die benannte messtechnische Bewertung der Empfangs- und/oder Kommunikationsparameter (101) in der Infrastruktur von einem der beiden Funknetze (2, 4) erfolgt.

8. Das Verfahren gemäss einem der Ansprüche 1 bis 7, in welchem die Entscheidung, ob ein Handover zweckmässig ist, in der Infrastruktur von einem der beiden Funknetze (2, 4) getroffen wird.

9. Das Verfahren gemäss einem der Ansprüche 1 bis 8, das ausserhalb einer Sprach- und/oder Datenübertragung stattfindet.

10. Das Verfahren gemäss einem der Ansprüche 1 bis 9, in welchem das benannte Mobilgerät (10, 12) mindestens temporär gleichzeitig im ersten Mobilfunknetz (2) und im zweiten Funknetz (4) angemeldet ist.

11. Das Verfahren gemäss einem der Ansprüche 1 bis 10, in welchem ein Heimdatei-Register (20) des Mobilfunknetzes (2) des benannten Mobilgeräts (10, 12) angibt, wenn das benannte Mobilgerät (10, 12) im benannten zweiten Funknetz (4) angemeldet ist.

12. Das Verfahren gemäss einem der Ansprüche 1 bis 11, in welchem ein Heimdatei-Register (20) des Mobilfunknetzes (2) des benannten Mobilgeräts (10, 12) angibt, wenn das benannte Mobilgerät (10, 12) gleichzeitig im zweiten Funknetz (4) und in einem Mobilfunknetz (2) angemeldet ist.

13. Das Verfahren gemäss einem der Ansprüche 1 bis 12, in welchem gleichzeitig eine erste Sprach- und/oder Datenübertragung im ersten Mobilfunknetz (2) und eine zweite Sprach- und/oder Datenübertragung im zweiten Funknetz (4) ausgeführt wird.

14. Das Verfahren des Anspruchs 1 bis 13, in welchem die Qualität der Übertragung als Kriterium bei der Ermittlung der Zweckmässigkeit eines Handovers verwendet wird und die Qualität der Übertragung zwischen dem benannten Mobilgerät (10, 12), der nächsten Basisstation (22) im benannten Mobilfunknetz (2) und dem nächsten Access Point (40) im benannten zweiten Funknetz (4) kontinuierlich oder periodisch gemessen wird.

15. Das Verfahren gemäss einem der Ansprüche 1 bis 14, in welchem als benannte Meldung eine SMS, MMS, EMS oder USSD übertragen wird.

16. Das Verfahren gemäss einem der Ansprüche 1 bis 15, in welchem die benannte Meldung über Instant Messaging Prozesses in einem Pop-Up Fenster auf einer graphischen Oberfläche des benannten Mobilgeräts (10, 12) wiedergegeben wird.

17. Das Verfahren gemäss einem der Ansprüche 1 bis 16, in welchem die benannte Meldung eine Audiomeldung oder ein Audiosignal umfasst.

18. Das Verfahren des Anspruchs 17, in welchem die benannte Audiomeldung eine automatisch generierte Sprachmeldung ist, die während einer Sprach- oder Datenübertragen dem Mobilteilnehmer (1) wiedergegeben wird.

19. Das Verfahren gemäss einem der Ansprüche 1 bis 18, in welchem die benannte Meldung nur dem betroffenen Mobilteilnehmer (1) wiedergegeben wird.

20. Das Verfahren gemäss einem der Ansprüche 1 bis 19, in welchem die benannte Meldung im benannten Mobilgerät (10, 12) erzeugt wird.

21. Das Verfahren gemäss einem der Ansprüche 1 bis 20, in welchem die benannte Meldung in der Infrastruktur von einem der benannten Funknetze (2, 4) erzeugt wird.

22. Das Verfahren gemäss einem der Ansprüche 1 bis 21, in welchem der benannte Mobilteilnehmer (1) positiv auf die benannte Meldung mit einer Datenmeldung an die Infrastruktur des Funknetzes (2, 4) antwortet.

23. Das Verfahren des Anspruchs 22, in welchem die benannte Datenmeldung eine SMS, MMS, EMS oder USSD ist.

24. Das Verfahren des Anspruchs 23, in welchem die benannte Datenmeldung eine E-mail oder ein IP-Packet über eine http, https oder wls-Session umfasst.

25. Das Verfahren gemäss einem der Ansprüche 1 bis 24, in welchem der benannte Mobilteilnehmer (1) positiv auf die benannte Meldung mit einem Sprachbefehl und/oder mit einem DTMF-Befehl antwortet.

26. Das Verfahren gemäss einem der Ansprüche 1 bis 25, in welchem die Entscheidung des benannten Mobilteilnehmers (1) im Mobilgerät (10, 12) bewertet wird, welches das Handover bei einer positiven Antwort auch auslöst.

27. Das Verfahren gemäss Anspruch 26, **dadurch gekennzeichnet, dass** Mobilteilnehmerpräferenzen über SMS, USSD, MMS oder über ein WAP oder WEB-Portal vom Mobilteilnehmer (1) geändert werden.

28. Das Verfahren gemäss einem der Ansprüche 27, **dadurch gekennzeichnet, dass** verschiedene Profile definiert werden, um das Handover-Verhalten schneller zu ändern oder in Abhängigkeit von externen Triggern anzupassen.

29. System mit folgenden Merkmalen:
Mittel zur Ermittlung der Empfangs- und/oder Kommunikationsparameter zwischen einem Mobilgerät (10, 12) und einer Basisstation in einem ersten digitalen öffentlichen zellularen Mobilfunknetz (2),
Mittel zur Ermittlung der Empfangs- und/oder Kommunikationsparameter zwischen einem Mobilgerät und einer Basisstation in einem zweiten drahtlosen Funknetz (4),
Entscheidungsmittel zur automatischen Ermittlung, dass ein Handover des Mobilgeräts (10, 12) zweckmässig ist,
Mittel, um eine Meldung automatisch zu erzeugen (103) und wiederzugeben (105), sobald ein zweckmässiges Handover ermittelt wurde,
Mittel, um vom Mobilteilnehmer (1) zugelassene Handovers zu veranlassen, wobei
die benannte Meldung eine Datenmeldung ist, **dadurch gekennzeichnet, dass** die Meldung während einer Sprach- oder Datenübertragung dem Mobilteilnehmer (1) angezeigbar ist, ohne die benannte Sprach- oder Datenübertragung zu unterbrechen, in welchem System der Mobilteilnehmer (1) seine persönlichen Präferenzen im Voraus angeben kann, um zu bestimmen, wann ein Handover als zweckmässig betrachtet werden soll.

30. Das System gemäss Anspruch 29, **dadurch gekennzeichnet, dass**
ein Kriterium oder eine Kombination folgender Kriterien
• die Qualität der Übertragung zwischen dem benannten Mobilgerät (10, 12), der nächsten Basisstation (22) im benannten Mobilfunknetz (2) und dem nächsten Access Point (40) im benannten zweiten Funknetz (4),
• die für die momentane oder geplante Sprach- oder Datenübertragung benötigte Bandbreite,
• im benannten Mobilgerät (10, 12) durchgeführte Applikationen,
• Mobilteilnehmerpräferenzen,
• Kommunikationstarife,
• die Geschichte von früheren Mobilteilnehmerbefehlen
als Kriterium bei der Ermittlung der Zweckmässigkeit eines Handovers verwendet wird.

31. Das System gemäss Anspruch 29 oder 30, in welchem das zweite Funknetz (4) ein WLAN-Netz, ein Bluetooth-Netz, ein UMTS-Netz (4) oder ein Mobilfunknetz ist.

32. Das System eines der Ansprüche 29 bis 31, in welchem beide Funknetze (2, 4) unterschiedliche Datenübertragungsgeschwindigkeiten aufweisen.

33. Das System eines der Ansprüche 29 bis 32, in welchem die Erzeugung und/oder die Wiedergabe der benannten Meldung vom Mobilteilnehmer (1) abschaltbar sind.

34. Das System eines der Ansprüche 29 bis 32, in welchem die benannte messtechnische Bewertung der Empfangs- und/oder Kommunikationsparameter (101) im benannten Mobilgerät (10, 12) erfolgt.

35. Das System eines der Ansprüche 29 bis 33, in welchem die benannte messtechnische Bewertung der Empfangs- und/oder Kommunikationsparameter (101) in der Infrastruktur von einem der beiden Funknetze (2, 4) erfolgt.

36. Das System eines der Ansprüche 29 bis 34, in welchem die Entscheidung, ob ein Handover zweckmässig ist, in der Infrastruktur von einem der beiden Funknetze (2, 4) getroffen wird.

37. Das System eines der Ansprüche 36, **dadurch gekennzeichnet, dass** die Mobilteilnehmerpräferenzen über SMS, USSD, MMS oder über ein WAP oder WEB-Portal vom Mobilteilnehmer (1) geändert werden können.

## Claims

1. A method for directing a handover of a mobile device (10, 12) of a mobile user (1) between a first mobile radio network (2) and a second radio network (4), with the following steps:
automatically determining through metrological evaluation of the reception and/or communication parameters that a handover between the first mobile radio network (2) and the second radio network (4) appears appropriate (102),
as soon as an appropriate handover has been determined, automatically generating (103) and displaying (105) a message in order to ask the mobile user (1) for his consent before the handover takes place (107),
wherein said message is a data message,
**characterized in that** the message is displayed to the mobile user (1) during a voice or data transmission without interrupting said voice or data transmission, where the mobile user (1) indicates in advance his personal preferences in order to determine when a handover is to be considered appropriate.

2. The method according to claim 1, **characterized in that**
a criteria or a combination of the following criteria are used as criteria for determining the appropriateness of a handover:
• the quality of the transmission between said mobile device (10, 12), the next base station (22) in said mobile radio network (2) and the next access point (40) in said second radio network (4),
• the bandwidth required for the current or planned voice or data transmission,
• the applications executed in said mobile device (10, 12),
• mobile user preferences,
• communication tariffs,
• the history of earlier mobile user commands.

3. The method according to claim 1 or 2, wherein the second radio network (4) is a WLAN network, a Bluetooth network, a UMTS network (4) or a mobile radio network.

4. The method of one of the claims 1 to 3, wherein both radio networks (2, 4) have different data transmission speeds.

5. The method of one of the claims 1 to 4, wherein the generation and/or displaying of said message is switched off by the mobile user (1).

6. The method according to one of the claims 1 to 5, wherein said metrological evaluation of the reception and/or communication parameters (101) takes place in said mobile device (10, 12).

7. The method according to one of the claims 1 to 6, wherein said metrological evaluation of the reception and/or communication parameters (101) takes place in the infrastructure of one of both radio networks (2, 4).

8. The method according to one of the claims 1 to 7, wherein the decision as to whether a handover is appropriate is made in the infrastructure of one of both radio networks (2, 4).

9. The method according to one of the claims 1 to 8, that takes place outside of a voice and/or data transmission.

10. The method according to one of the claims 1 to 9, wherein said mobile device (10, 12) is logged at least temporarily into the first mobile radio network (2) and in the second radio network (4) simultaneously.

11. The method according to one of the claims 1 to 10, wherein a home file register (20) of the mobile radio network (2) of said mobile device (10, 12) indicates whether said mobile device (10, 12) is logged into said second radio network (4).

12. The method according to one of the claims 1 to 11, wherein a home file register (20) of the mobile radio network (2) of said mobile device (10, 12) indicates whether said mobile device (10, 12) is logged simultaneously into the second radio network (4) and in a mobile radio network (2).

13. The method according to one of the claims 1 to 12, wherein a first voice and/or data transmission in the first mobile radio network (2) and a second voice and/or data transmission in the second radio network (4) are carried out simultaneously.

14. The method of one of the claims 1 to 13, wherein the quality of the transmission is used as criteria for determining the appropriateness of a handover and the quality of the transmission between said mobile device (10, 12), the next base station (22) in said mobile radio network (2) and the next access point (40) in said second radio network (4) is measured continuously or periodically.

15. The method according to one of the claims 1 to 14, wherein as said message a SMS, MMS, EMS or USSD is transmitted.

16. The method according to one of the claims 1 to 15, wherein said message is displayed over instant messaging processes in a pop-up window on a graphical user interface of said mobile device (10, 12).

17. The method according to one of the claims 1 to 16, wherein said message includes an audio message or an audio signal.

18. The method of claim 17, wherein said audio message is an automatically generated voice message that is displayed to the mobile user (1) during a voice or data transmission.

19. The method according to one of the claims 1 to 18, wherein said message is displayed only to the mobile user (1).

20. The method according to one of the claims 1 to 19, wherein said message is generated in said mobile device (10, 12).

21. The method according o one of the claims 1 to 20, wherein said message is generated in the infrastructure of one of said radio networks (2, 4).

22. The method according to one of the claims 1 to 21, wherein said mobile user (1) replies positively to said message with a data message to the infrastructure of the radio network (2, 4).

23. The method of claim 22, wherein said data message is an SMS, MMS, EMS or USSD.

24. The method of claim 23, wherein said data message includes an e-mail or an IP packet over an http, https or wls session.

25. The method according to one of the claims 1 to 24, wherein said mobile user (1) replies positively to said message with a voice command and/or with a DTMF command.

26. The method according to one of the claims 1 to 25, wherein the decision of said mobile user (1) is evaluated in the mobile device, which also triggers the handover in the case of a positive reply.

27. The method according to claim 26, **characterized in that** mobile user preferences are changed by the mobile user (1) over SMS, USSD, MMS or over a WAP or WEB portal.

28. The method of claim 27, **characterized in that** different profiles are defined in order to change the handover behaviour faster or to adapt it according to external triggers.

29. System with the following characteristics:
means for automatically determining the reception and/or communication parameters between a mobile device (10, 12) and a base station in a first digital public cellular mobile radio network (2),
means for determining the reception and/or communication parameters between a mobile device and a base station in a second wireless radio network (4),
decision means for automatically determining that a handover of the mobile device (10, 12) is appropriate,
means for automatically generating (103) and displaying (105) a message, as soon as an appropriate handover has been determined,
means to bring about handovers authorized by the mobile user (1),
wherein said message is a data message,
**characterized in that** the message can be displayed to the mobile user (1) during a voice or data transmission without interrupting said voice or data transmission, in which system the mobile user (1) can indicate in advance his personal preferences in order to determine when a handover is to be considered appropriate.

30. The system according to claim 29, **characterized in that**
a criteria or a combination of the following criteria are used as criteria for determining the appropriateness of a handover:
• the quality of the transmission between said mobile device (10, 12), the next base station (22) in said mobile radio network (2) and the next access point (40) in said second radio network (4),
• the bandwidth required for the current or planned voice or data transmission,
• the applications executed in said mobile device (10, 12),
• mobile user preferences,
• communication tariffs,
• the history of earlier mobile user commands.

31. The system according to claim 29 or 30, wherein the second radio network (4) is a WLAN network, a Bluetooth network, a UMTS network (4) or a mobile radio network.

32. The system according to claim 29 to 31, wherein both radio networks (2, 4) have different data transmission speeds.

33. The system according to claim 29 to 32, wherein the generation and/or displaying of said message can be switched off by the mobile user (1).

34. The system according to claim 29 to 33, wherein said metrological evaluation of the reception and/or communication parameters (101) takes place in said mobile device (10, 12).

35. The system according to claim 29 to 34, wherein said metrological evaluation of the reception and/or communication parameters (101) takes place in the infrastructure of one of both radio networks (2, 4).

36. The system according to claim 29 to 35, wherein the decision as to whether a handover is appropriate is made in the infrastructure of one of both radio networks (2, 4).

37. The system of claim 36, **characterized in that** mobile user preferences can be changed by the mobile user (1) over SMS, USSD, MMS or over a WAP or WEB portal.

## Revendications

1. Une méthode pour contrôler un transfert d'un appareil mobile (10, 12) d'un abonné mobile (1) entre un premier réseau radio mobile (2) et un deuxième réseau radio (4), avec les étapes suivantes:
déterminer automatiquement par une évaluation métrologique des paramètres de réception et/ou de communication qu'un transfert entre un premier réseau radio mobile (2) et un deuxième réseau radio (4) apparaît approprié (102),
dès qu'il a été déterminé qu'un transfert semble approprié, un message est automatiquement généré (103) et reproduit (105) pour demander à l'abonné mobile (1) son accord avant que le transfert n'ait lieu (107),
ledit message étant un message de données,
**caractérisée en ce que**
le message est indiqué à l'abonné mobile (1) pendant une transmission vocale ou de données sans interrompre ladite transmission vocale ou de données, l'abonné mobile (1) indiquant à l'avance ses préférences personnelles afin de définir quand un transfert doit être considéré comme approprié.

2. La méthode selon la revendication 1, **caractérisée en ce que**:
un critère ou une combinaison des critères suivants est utilisé(e) pour déterminer la pertinence d'un transfert:
• la qualité de la transmission entre ledit appareil mobile (10, 12), la prochaine station de base (22) dans ledit réseau radio mobile (2) et le prochain point d'accès (40) dans ledit deuxième réseau radio (4),
• la bande passante nécessaire pour la transmission vocale ou de données actuelle ou prévue,
• des applications exécutées dans ledit appareil mobile (10, 12),
• des préférences de l'abonné mobile,
• des tarifs de communication,
• l'historique des précédents ordres de commande de l'abonné mobile.

3. La méthode selon la revendication 1 ou 2, dans laquelle le deuxième réseau radio (4) est un réseau WLAN, un réseau Bluetooth, a réseau UMTS (4) ou un réseau radio mobile.

4. La méthode selon l'une des revendications 1 à 3, dans laquelle les deux réseaux radio (2, 4) possèdent différentes vitesses de transmission de données.

5. La méthode selon l'une des revendications 1 à 4, dans laquelle la génération et/ou la reproduction dudit message est éteint par l'abonné mobile (1).

6. La méthode selon l'une des revendications 1 à 5, dans laquelle ladite évaluation métrologique des paramètres de réception et/ou de communication (101) se déroule dans ledit appareil mobile (10, 12).

7. La méthode selon l'une des revendications 1 à 6, dans laquelle ladite évaluation métrologique des paramètres de réception et/ou de communication (101) se déroule au sein de l'infrastructure de l'un des deux réseaux radio (2, 4).

8. La méthode selon l'une des revendications 1 à 7, dans laquelle la décision qu'un transfert est approprié est prise au sein de l'infrastructure de l'un des deux réseaux radio (2, 4).

9. La méthode selon l'une des revendications 1 à 8, qui se déroule en dehors d'une transmission vocale et/ou de données.

10. La méthode selon l'une des revendications 1 à 9, dans laquelle ledit appareil mobile (10, 12) s'annonce au moins temporairement dans le premier réseau radio mobile (2) et dans le deuxième réseau radio (4) simultanément.

11. La méthode selon l'une des revendications 1 à 10, dans laquelle une HLR (20) du réseau radio mobile (2) dudit appareil mobile (10, 12) indique si ledit appareil mobile (10, 12) est annoncé dans ledit deuxième réseau radio (4).

12. La méthode selon l'une des revendications 1 à 11, dans laquelle une HLR (20) du réseau radio mobile (2) dudit appareil mobile (10, 12) indique si ledit appareil mobile (10, 12) est annoncé simultanément dans le deuxième réseau radio (4) et dans un réseau radio mobile (2).

13. La méthode selon l'une des revendications 1 à 12, dans laquelle une première transmission vocale et/ou de données est exécutée dans le premier réseau radio mobile (2) et simultanément une deuxième transmission vocale et/ou de données est exécutée dans le deuxième réseau radio (4).

14. La méthode selon l'une des revendications 1 à 13, dans laquelle la qualité de la transmission est utilisée comme critère pour déterminer la pertinence d'un transfert et la qualité de la transmission entre ledit appareil mobile (10, 12), la prochaine station de base (22) dans ledit réseau radio mobile (2) et le prochain point d'accès (40) dans ledit deuxième réseau radio (4) sont mesurés continuellement ou périodiquement.

15. La méthode selon l'une des revendications 1 à 14, dans laquelle un SMS, MMS, EMS ou USSD est transmis en tant que dit message.

16. La méthode selon l'une des revendications 1 à 15, dans laquelle ledit message est reproduit par le biais de processus de messagerie instantanée dans une fenêtre de menu à affichage rapide sur une interface graphique dudit appareil mobile (10, 12).

17. La méthode selon l'une des revendications 1 à 16, dans laquelle ledit message comprend un message audio ou un signal audio.

18. La méthode de la revendication 17, dans laquelle ledit message audio est un message vocal généré automatiquement qui est affiché pour l'abonné mobile (1) pendant une transmission vocale ou de données.

19. La méthode selon l'une des revendications 1 à 18, dans laquelle ledit message est reproduit seulement pour l'abonné mobile (1) concerné.

20. La méthode selon l'une des revendications 1 à 19, dans laquelle ledit message est généré dans ledit appareil mobile (10, 12).

21. La méthode selon l'une des revendications 1 à 20, dans laquelle ledit message est généré au sein de l'infrastructure de l'un desdits réseaux radio (2, 4).

22. La méthode selon l'une des revendications 1 à 21, dans laquelle ledit abonné mobile (1) répond positivement audit message avec un message de données à l'infrastructure du réseau radio (2, 4).

23. La méthode de la revendication 22, dans laquelle ledit message de données est un SMS, MMS, EMS ou USSD.

24. La méthode de la revendication 23, dans laquelle ledit message de données inclut un e-mail ou un paquet IP au travers d'une session http, https ou wls.

25. La méthode selon l'une des revendications 1 à 24, dans laquelle ledit abonné mobile (1) répond positivement audit message avec une commande vocale et/ou avec une commande DTMF.

26. La méthode selon l'une des revendications 1 à 25, dans laquelle la décision dudit abonné mobile (1) est évaluée dans l'appareil mobile (10, 12) qui déclenche également le transfert en cas de réponse positive.

27. La méthode selon la revendication 26, **caractérisée en ce que** les préférences de l'abonné mobile sont modifiées par l'abonné mobile (1) par le biais d'SMS, USSD, MMS ou au travers d'un portail WAP ou WEB.

28. La méthode selon de la revendication 27, **caractérisée en ce que** différents profils sont définis pour modifier plus rapidement le comportement de transfert ou pour l'adapter selon des déclencheurs externes.

29. Système avec les caractéristiques suivantes:
des moyens pour déterminer les paramètres de réception et/ou de communication entre un appareil mobile (10, 12) et une station de base dans un premier réseau radio mobile cellulaire numérique public (2),
des moyens pour déterminer les paramètres de réception et/ou de communication entre un appareil mobile (10, 12) et une station de base dans un deuxième réseau radio sans fil (4),
des moyens pour déterminer automatiquement qu'un transfert de l'appareil mobile (10, 12) est approprié,
des moyens pour automatiquement générer (103) et reproduire (105) un message dès qu'un transfert a été jugé approprié,
des moyens pour provoquer les transferts autorisés par l'abonné mobile (1),
ledit message étant un message de données,
**caractérisée en ce que**
le message est indiqué à l'abonné mobile (1) le message pouvant être indiqué à l'abonné mobile (1) pendant une transmission vocale ou de données sans interrompre ladite transmission vocale ou de données, l'abonné mobile (1) indiquant à l'avance ses préférences personnelles afin de définir quand un transfert doit être considéré comme approprié.

30. Le système selon la revendication 29, **caractérisé en ce que**
un critère ou une combinaison des critères suivants est utilisé(e) pour déterminer la pertinence d'un transfert:
• la qualité de la transmission entre ledit appareil mobile (10, 12), la prochaine station de base (22) dans ledit réseau radio mobile (2) et le prochain point d'accès (40) dans ledit deuxième réseau radio (4),
• la bande passante nécessaire pour la transmission vocale ou de données actuelle ou prévue,
• des applications exécutées dans ledit appareil mobile (10, 12),
• des préférences de l'abonné mobile,
• des tarifs de communication,
• l'historique des précédents ordres de commande de l'abonné mobile.

31. Le système selon la revendication 29 ou 30, dans lequel le deuxième réseau radio (4) est un réseau WLAN, un réseau Bluetooth, un réseau UMTS (4) ou un réseau radio mobile.

32. Le système de l'une des revendications 29 à 31, dans lequel les deux réseaux radio (2, 4) possèdent différentes vitesses de transmission de données.

33. Le système de l'une des revendications 29 à 32, dans lequel, dans laquelle la génération et/ou la reproduction dudit message peut être éteint par l'abonné mobile (1).

34. Le système de l'une des revendications 29 à 33, dans lequel ladite évaluation métrologique des paramètres de réception et/ou de communication (101) se déroule dans ledit appareil mobile (10, 12).

35. Le système de l'une des revendications 29 à 34, dans lequel ladite évaluation métrologique des paramètres de réception et/ou de communication (101) se déroule au sein de l'infrastructure de l'un des deux réseaux radio (2, 4).

36. Le système de l'une des revendications 29 à 35, dans lequel la décision qu'un transfert est approprié est prise au sein de l'infrastructure de l'un des deux réseaux radio (2, 4).

37. Le système de la revendications 36, **caractérisé en ce que** les préférences de l'abonné mobile sont modifiées par l'abonné mobile (1) par le biais d'SMS, USSD, MMS ou au travers d'un portail WAP ou WEB.
